# EUROPEAN PATENT SPECIFICATION

(11) **EP 1 867 524 B1**
(45) Date of publication and mention of the grant of the patent: **28.03.2012**
(21) Application number: 07010977.2
(22) Date of filing: 04.06.2007
(51) Int. Cl.: B62D 15/00, B60Q 1/00

(54) **Visual recognition assistance device for vehicle**
Vorrichtung zur Sichtunterstützung für ein Fahrzeug
Dispositif à soutien de la vue pour un véhicule

(30) Priority: 05.06.2006 JP 2006156168; 06.02.2007 JP 2007027291
(43) Date of publication of application: 19.12.2007
(73) Proprietor: HONDA MOTOR CO., LTD., Tokyo 107-8556 (JP)
(72) Inventor: Matsumoto, Yoshiyuki c/o Honda R&D Co., Ltd., Wako-shi Saitama (JP); Uematsu, Hiroshi c/o Honda R&D Co., Ltd., Wako-shi Saitama (JP)
(74) Representative: Prechtel, Jörg

(56) References cited:
- WO-A-2005/038744
- GB-A- 2 223 464
- GB-A- 2 224 475
- GB-A- 2 419 118
- JP-A- 2000 094 961
- US-A- 3 434 214
- US-A- 3 469 234
- US-A- 3 603 929
- US-A- 5 321 415

## Description

The present invention relates to a visual recognition assistance device for a vehicle (hereinafter also referred to as "vehicular visual recognition assistance device") according to the preamble part of claim 1, which permits enhanced visibility through a particular area of a windshield (i.e., front window).

In the field of vehicular visual recognition assistance devices, there has been proposed an attempt to enhance visibility through a windshield while allowing a driver's line of vision to be kept in an appropriate position practically automatically. Further, it has also been conventional to give priority to securement of a sufficient field of vision from a windshield (front window). Among such vehicular visual recognition assistance devices are those that are constructed to prevent a seam joint of an instrument panel from being reflected as a line in the windshield (see, for example, Japanese Patent Application Laid-Open Publication No. 2000-280789).

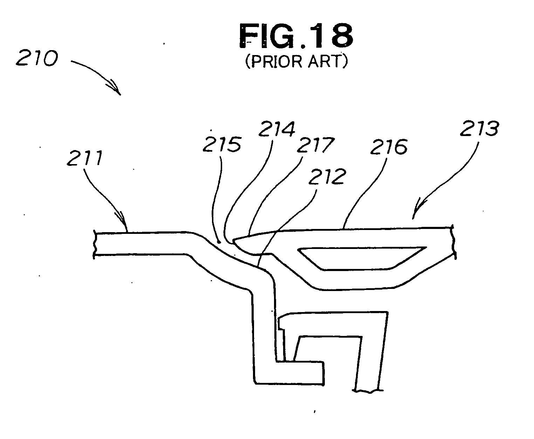

Fig. 18 is a view explanatory of a fundamental construction of the conventional vehicular visual recognition assistance device disclosed in the 2000-280789 publication. This visual recognition assistance device 210 includes an instrument panel 211, a recessed portion 212 formed in the instrument panel 211, a lid member 213 for covering the recessed portion 212, a gap 215 formed between the recessed portion 212 and a peripheral edge region 214 of the lid member 213, and a light receiving portion 217 formed adjacent to the peripheral edge region 214 of the lid member 213 and slanting downward toward the recessed portion 212 to be lower than a middle portion 216 of the lid member 213. The visual recognition assistance device 210 is arranged in this manner with a view to preventing the gap 215 from being reflected as a line in a windshield (front window) (not shown) and thereby securing a sufficient field of vision from the windshield.

The visual recognition assistance device 210, however, the driver can not enhance degree of visual attention to a predetermined area by allowing a driver's line of vision to be kept in an appropriate position practically automatically, although it can prevent the gap 215 of the instrument panel 211 from being reflected as a line in the windshield so as to secure a sufficient field of vision from the windshield. Besides, the visual recognition assistance device 210 does not have a function to correct the driver's line of vision to be kept in the center of a traffic lane.

A visual recognition assistance device according to the preamble part of claim 1 is disclosed in US 3 469 234 and comprises a dividing means that projects a horizontal line on a windshield of a vehicle, wherein a vertical position of the line is changed according to vehicle speed and a projected position of the horizontal line to a road surface corresponds to the safety distance to be observed by the driver at the specific vehicle speed.

Document GB 2 223 464 A discloses a rear view mirror of a vehicle having a plurality of lines at certain vertical positions that correspond to respective safety distances when projected on a road surface. This conventional assistance device assists a driver indicating the distance of a preceding vehicle.

Document US3 603 929 discloses a visual recognition assistance device for a vehicle that projects two horizontal lines positioned side by side at the same vertical position on a windshield. When a driver focuses a preceding car, the two lines appear as three horizontal lines arranged side by side, wherein the length of the lines is varied by controlling the projecting means depending on the vehicle speed.

Document US 5 321 415 discloses a vehicle speed meter that projects a signal indicative of the vehicle speed on the windshield of the vehicle in such way that the vehicle speed can be recognized by the driver without changing the focus of the driver looking at the road.

In view of the foregoing prior art problems, it is an object of the present invention to provide a visual recognition assistance device for a vehicle which can not only secure a sufficient field of vision from a windshield (front window) but also enhance degree of visual attention to a predetermined area by allowing a driver's line of vision to be kept in an appropriate position practically automatically.

In order to accomplish the above-mentioned object, the present invention provides an improved visual recognition assistance device for a vehicleaccording to claim 1. Such a device comprises a dividing section provided, substantially horizontally on a windshield of the vehicle, for vertically dividing at least a part of the windshield into a plurality of areas. The dividing section is formed so that, when the dividing section is projected to a road surface a predetermined distance ahead of a viewing point position of a human driver of the vehicle, the dividing section has a projected width equal to or smaller than a lane width of the road.

Thus, by the provision of the dividing section and by making use of a generally-known driver's habit of unconsciously trying to keep the vehicle close to the center of the lane during driving of the vehicle, the visual recognition assistance device can effectively visually prompt the driver to drive stably.

Further, as an alternative, an improved visual recognition assistance device for a vehicle according to claim 1 comprises a dividing section for vertically dividing at least a part of the windshield into a plurality of areas. The dividing section includes a virtual image production section disposed under the windshield for causing a virtual image to be reflected in the windshield, and the virtual image production section is constructed so that the virtual image can be visually recognized as a substantial straight line from a viewing point position of a human driver.

Thus, the vehicular visual recognition assistance device can be provided at low cost without any particular processing having to be applied to the windshield itself. Further, because the virtual image (reflected image) is formed forwardly of the windshield (i.e., some distance ahead of the windshield), the driver can easily and conveniently use the vehicular visual recognition assistance device without involving frequent focal shifts during driving of the vehicle.

Preferably, the virtual image production section includes an instrument panel disposed under the windshield, and a parting line formed on the instrument panel.

Preferably, the virtual image production section is disposed in a defroster nozzle. Thus, it is possible to significantly simplify the shape of the instrument panel and enhance the design freedom of the instrument panel.

Preferably, the virtual image production section is disposed in a position where the virtual image production section is invisible from the human driver. Thus, it is possible to prevent the driver from directly viewing the windshield dividing section over the instrument panel, and thus, sufficient design quality of the instrument panel can be secured. As a result, the driver can easily and conveniently use the vehicular visual recognition assistance device.

Preferably, the virtual image production section is formed so that, when the virtual image is projected to a road surface a predetermined distance ahead of a viewing point position of the driver, the virtual image has a projected width equal to or smaller than a lane width of the road. Thus, by the provision of the dividing section and by making use of the generally-known driver's habit of unconsciously trying to keep the vehicle close to the center of the lane during driving of the vehicle, the visual recognition assistance device can effectively visually prompt the driver to drive stably.

Preferably, the dividing section vertically divides the windshield into at least three areas and is constructed to weaken or reduce inflection of the instrument panel on a middle one of the at least three areas. By reducing or restricting reflection of the instrument panel in the middle area of the three areas while permitting a certain degree of reflection of the instrument panel in the upper and lower areas, the present invention can enhance visibility through the middle area of the windshield so that it can cause the line of vision of the driver to be directed to the middle area practically automatically. As a result, the present invention allows the line of vision of the driver to be kept in an appropriate position practically automatically.

Preferably, the parting line on the instrument panel is formed- by providing a dashboard tray capable of receiving thereon a small article. Thus, the parting line of the instrument panel can be formed in a more natural manner without the design quality of the instrument panel being adversely influenced.

Preferably, the visual recognition assistance device further comprises an auxiliary division section that comprises oblique lines extending obliquely downwardly, away from each other, at opposite ends of the dividing section. Such an arrangement can not only promote the driver's habit of unconsciously trying to keep the vehicle close to the center of a lane during driving of the vehicle, but also even further effectively prompt the driver to drive stably.

Certain preferred- embodiments of the present invention will hereinafter be described in detail, by way of example only, with reference to the accompanying drawings, in which:
Fig. 1 is a perspective view of a vehicular visual recognition assistance device in accordance with a first embodiment of the present invention as viewed from the interior of a vehicle compartment;
Fig. 2 is a side view of the visual recognition assistance device shown in Fig. 1;
Fig. 3 is a view explanatory of how a length of a windshield dividing section is determined in the vehicular visual recognition assistance device shown in Fig. 1;
Fig. 4 is a plan view of a vehicle when the vehicle shown in Fig. 1 is on a road;
Fig. 5 is a view explanatory of basic principles of the vehicular visual recognition assistance device shown in Fig. 1
(a) - (d) of Fig. 6 are views showing the embodiment of the present invention and a comparative example;
Fig. 7 is a side view showing a vehicular visual recognition assistance device in accordance with a second embodiment of the present invention;
Fig. 8 is a view explanatory of how a length of a virtual image is determined in the second embodiment shown in Fig. 7;
Fig. 9 is a side view showing a vehicular visual recognition assistance device in accordance with a third embodiment of the present invention;
Fig. 10 is a side view showing a vehicular visual recognition assistance device in accordance with a fourth embodiment of the present invention;
Fig. 11 is a side view showing a vehicular visual recognition assistance device in accordance with a fifth embodiment of the present invention.
Fig. 12 is a perspective view showing a vehicular visual recognition assistance device in accordance with a sixth embodiment of the present invention;
Fig. 13 is a plan view of the vehicular visual recognition assistance device shown in Fig. 12;
Fig. 14 is a plan view showing a vehicular visual recognition assistance device in accordance with a seventh embodiment of the present invention;
Fig. 15 is a sectional view explanatory of basic principles of the vehicular visual recognition assistance device shown in Fig. 14;
Fig. 16 is a front view of a vehicular visual recognition assistance device in accordance with an eighth embodiment of the present invention;
Fig. 17 is a front view of a vehicular visual recognition assistance device in accordance with a ninth embodiment of the present invention; and
Fig. 18 is a view explanatory of a fundamental construction of a conventional vehicular visual recognition assistance device.

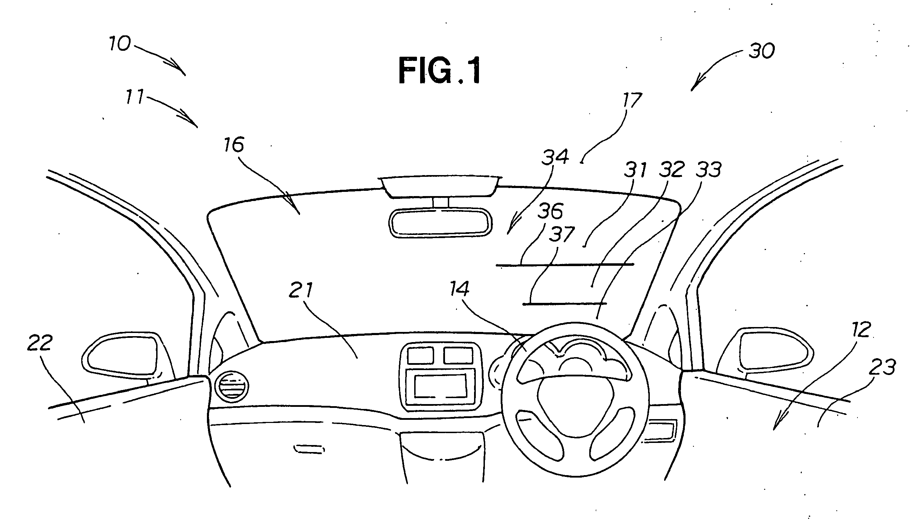

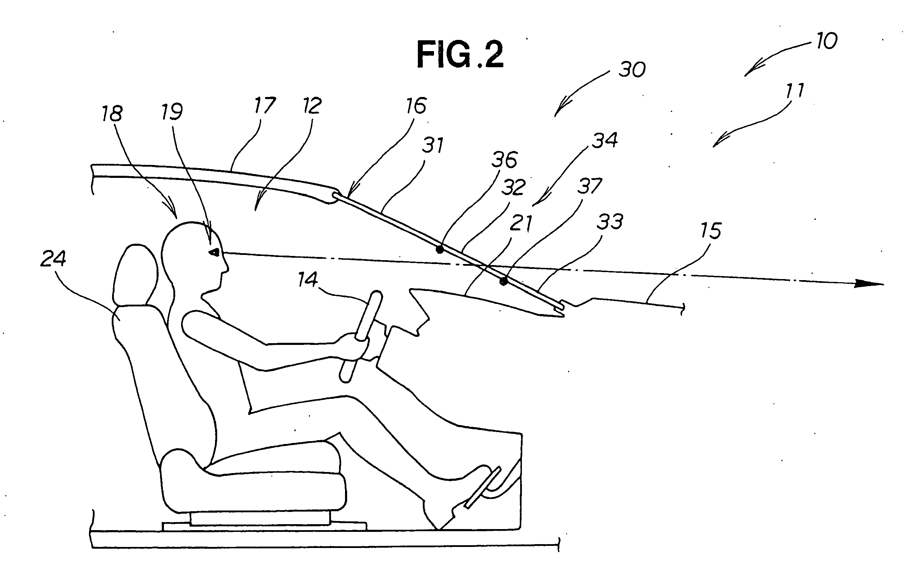

Reference is now made to Fig. 1 showing in perspective a vehicular visual recognition assistance device in accordance with a first embodiment of the present invention as viewed from the interior of a vehicle compartment, and to Fig. 2 showing in side elevation the visual recognition assistance device of Fig. 1.

The vehicle 10 shown in Figs. 1 and 2 includes: a steering wheel 14; a hood 15 covering a front section of a vehicle body 11; a windshield (front window) 16 covering a front section of the vehicle compartment 12; a roof 17 covering an upper section of the vehicle compartment 12; an instrument panel 21 positioned in a front area of the vehicle compartment 12; left and right doors 22 and 23 covering left and right sides of the vehicle compartment 12; a seat 24 for a driver 18; and the visual recognition assistance device 30 constructed to allow a line of vision of the driver 18 to be kept in an appropriate position practically automatically.

The vehicular visual recognition assistance device 30 includes a windshield dividing section 34 that is disposed generally horizontally on the windshield 16 and vertically divides at least a part of the windshield 16 into a plurality of areas (first to third areas 31 - 33 in the illustrated example). The windshield dividing section 34 comprises an upper line 36 positioned substantially horizontally on the windshield 16, and a lower line 37 positioned substantially parallel to the upper line 36. It is preferable that the upper line 36 have a slightly smaller width (i.e., line thickness) than the lower line 37 so that the upper and lower lines 36 and 37 have generally the same width (line thickness) as viewed from the human driver.

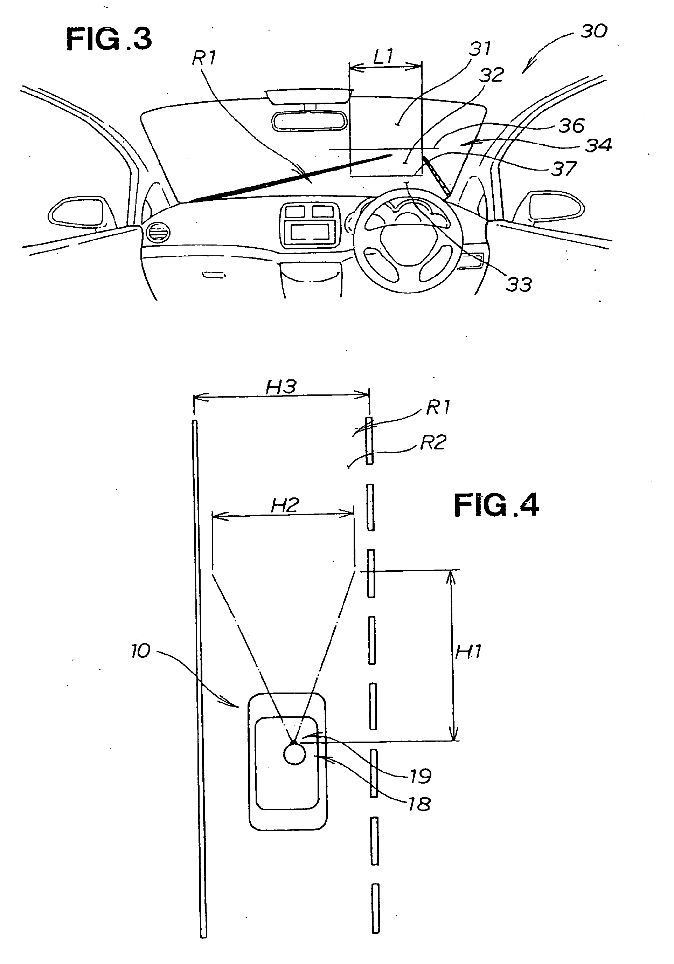

Fig. 3 is a view explanatory of how a length of the dividing section 34 (particularly, lower line 37) is determined in the embodiment, and Fig. 4 is a plan view of the vehicle 10 when the vehicle 10 shown in Fig. 1 is on a road.

As shown in Figs. 3 and 4, the upper line 36 is a line that vertically divides a part of the windshield 16 into the first and second areas 31 and 32. The upper line 36 may be formed by a translucent film attached directly to the part of the windshield 16, or by painting, printing or the like applied directly to the part of the windshield 16.

The lower line 37 is a line that divides another part of the windshield 16 into the second area 32 and third area 33. The lower line 37 is formed into a length L1 such that, when the line 37 is projected to a road surface R2 a predetermined distance H1 ahead of the viewing point position (eye point) 19 of the driver 18, the line 37 has a projected width (i.e., projected dimension in a width direction of the road) H2 equal to or smaller than a lane width H3 of the road R1. Similarly to the upper line 36, the lower line 37 may be formed by a translucent film attached directly to the part of the windshield 16, or by painting, printing or the like applied directly to the part of the windshield 16. The lower line 37 is intended to assist the driver in positioning the vehicle in the center of the lane, making use of the driver's habit of unconsciously trying to keep the lower line 37 in the center of the lane.

Securing a sufficient field of vision from the windshield and enhancing degree of visual attention to a predetermined area by allowing a line of vision of the driver to be kept in an appropriate position practically automatically is preferable in that it can effectively visually prompt the driver to drive stably.

For that purpose, the visual recognition assistance device 30 includes the windshield dividing section 34 that is disposed generally horizontally to divide part of the windshield 16 into the plurality of areas (first to third areas 31 - 33 in the illustrated example), and the lower line 37 has the length L1 such that, when the line 37 is projected to the road surface R2 the predetermined distance H1 ahead of the eye point 19 of the driver 18, the line 37 has a projected width (i.e., projected dimension in a width direction of the road) H2 equal to or smaller than the lane width H3 of the road R1. Thus, by the provision of the lower line 37 and by making use of the generally-known driver's habit of unconsciously trying to keep the vehicle 10 close to the center of the lane during driving of the vehicle, the visual recognition assistance device 30 can effectively visually prompt the driver 10 to drive stably.

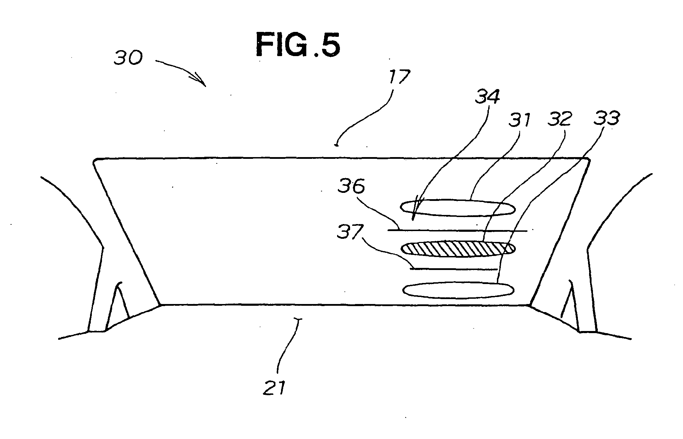

Fig. 5 is a view explanatory of basic principles of the vehicular visual recognition assistance device 30 shown in- Fig. 1. As shown, at least a predetermined part of the windshield 16 is divided into three areas, i.e. the first area 31 located between the roof 17 and the upper line 36, second area 32 defined between the upper line 36 and the lower line 37 and third area 33 located between the lower line 37 and the instrument panel 21 (or hood 15).

It is known that, when an object obstructing a field of vision of a person is present, that person tries to determine his or her eye point (viewing point position) such that the obstructing obstacle is located as close to a peripheral edge of the person's field of vision as possible.

In the case of the windshield 16, the roof 17 and instrument panel 21 are relatively great or strong obstructing objects while the upper and lower lines 36 and 37 are relatively small or weak obstructing objects, and thus, the driver's line of vision tends to move to the second or middle area ; the driver's line of vision does not stay long in the first and third areas 31 and 33 closer to the strong obstructing objects (i.e., roof 17 and instrument panel 21). Further, the driver's line of vision, having been led to the second area 32, tends to be moved toward the middle of the second area 32 because the driver tries to keep the line of vision away from the upper and lower lines 36 and 37 that are weak obstructing objects; as a result, the line of vision can be kept in an appropriate position practically automatically.

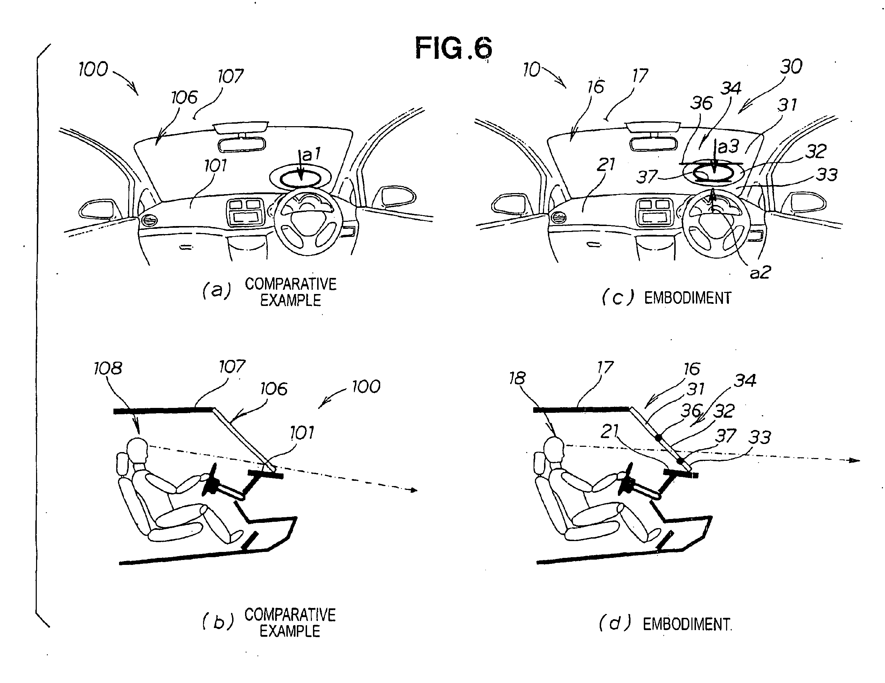

(a) of Fig. 6 is a perspective view of a comparative example of a vehicle 100 equipped with no vehicular visual recognition assistance device, and (b) of Fig. 6 is a side view showing a very likely line of vision of a driver 108 in the vehicle 100. Further, (c) of Fig. 6 is a perspective view of the vehicle 10 equipped with the vehicular visual recognition assistance device 30 according to the instant embodiment, and (d) of Fig. 6 is a side view showing a line of vision of the driver 18 in the vehicle 10.

In the vehicle 100 shown in (a) of Fig. 6, obstructing objects, such as the roof 107 and instrument panel 101, are spaced apart from each other by a relatively great distance, and thus, the driver's line of vision tends to greatly vary in position in a height direction of the windshield 106, as illustrated in (b) of Fig. 6. Particularly, if the driver 108 is an inexperienced driver, the line of vision of the driver tends to lower as indicated by arrow al. If the driver's line of vision lowers like this, the driver 108 can only see regions in a so-called point-blank range from the vehicle 100, which would render it difficult for the driver 108 to make proper predictions and take proper precautions during driving of the vehicle.

In the vehicle 10 shown in (c) of Fig. 6, where the windshield 16 is divided into the first to third areas 31 to 33, the driver's line of vision hardly stays in the first and third areas 31 and 33 located adjacent to the roof 17 and instrument panel 21 that are strong obstructing objects. Therefore, the driver's line of vision tends to be directed toward the middle of the second area 32 as indicated by arrow a2 and a3, so that the line of vision can be kept in an appropriate position practically automatically. Because the line of vision of the driver 18 can always be kept in an appropriate position practically automatically such that road regions remote from the eye point of the driver 18 can come into sight as seen in (d) of Fig. 6, the driver 108 can easily make proper predictions and take proper precautions during driving of the vehicle.

Further, the provision of the windshield 16, vertically dividing the windshield 16 into the plurality of substantially horizontal areas (first to third areas 31 - 33 in the illustrated example), allows the driver to direct its viewing point position far ahead, so that visual attention to forward regions of the vehicle can be significantly enhanced.

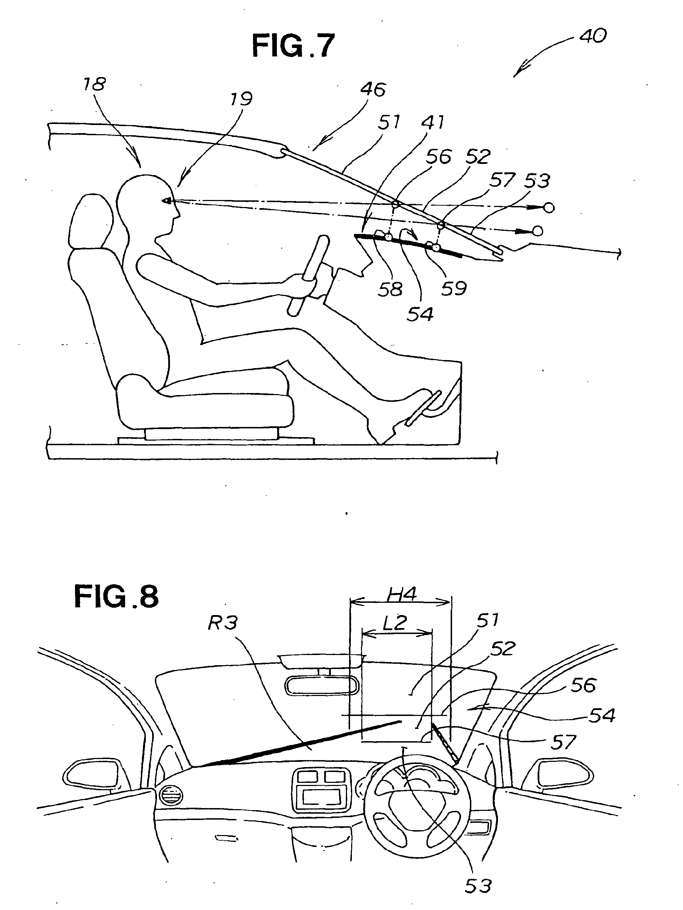

Fig. 7 is a side view showing a vehicular visual recognition assistance-device 40 in accordance with a second embodiment of the present invention. The same elements as employed in the first embodiment 30 (see Fig. 2) are indicated by the same reference numerals and will not be described here to avoid unnecessary duplication.

The vehicular visual recognition assistance device 40 in accordance with the second embodiment of the present invention includes a windshield dividing section 54 that vertically divides at least a part of a windshield 46 into a plurality of substantial horizontal areas (first to third areas 51 - 53 in the illustrated example).

The windshield dividing section 54 in the second embodiment is constructed as a virtual image production means which is disposed under the windshield 46 and capable of causing substantially-horizontal upper and lower virtual images 56 and 57 to be reflected in the windshield 46. Preferably, the virtual image production section (windshield dividing section) 54 comprises an instrument panel 41, and first and second substantially-horizontal parting lines 58 and 59 provided on the instrument panel 41.

The first and second parting lines 58 and 59 are of a color presenting a strong contrast to the instrument panel 41. For example, if the outer surface of the instrument panel 41 has a black color, the first and second parting lines 58 and 59 are each preferably formed as a line having a glossy surface that; for example, has a white color or is plated with chrome. Also, the first and second parting lines 58 and 59 are constructed so that the virtual images thereof can be visually recognized as substantially straight lines from the eye point. (viewing point position) of the driver.

For example, if the windshield 46 presents an inner curve as viewed from the interior of the vehicle compartment 12, the first and second parting lines 58 and 59 are each formed into a shape curved in such a direction as to cancel out the inner curve.

Because the windshield dividing section 54 in the device 40 is constructed as the virtual image production means disposed under the windshield 46 and capable of causing the upper and lower virtual images 56 and 57 to be reflected in the windshield 46, and because the virtual image production means (windshield dividing section) 54 is constructed so that the virtual images 56 and 57 can be recognized as substantial straight lines from the eye point (viewing point position) of the driver, the vehicular visual recognition assistance device 40 can be provided at low cost without any extra processing being applied to the windshield 46 itself.

Further, because the virtual images (reflected images) 56 and 57 are formed forwardly of the windshield 46 (i.e., some distances ahead from the windshield 46), the driver can easily and conveniently use the vehicular visual recognition assistance device 40 without involving frequent focal shifts (i.e., focal adjustment) during driving of the vehicle; thus, it is possible to reduce a load on the vehicle driver during driving.

Further, because the virtual image production means (windshield dividing section) 54 comprises only the instrument panel 41 and the first and second parting lines 58 and 59 provided on the instrument panel 41, it can be provided readily with sufficient design quality of the instrument panel 41 secured.

Fig. 8 is a view explanatory of how a length of one of the virtual images is determined in the second embodiment shown in Fig. 7. As shown in Fig. 8, the upper virtual image 56 divides a part of the windshield 46 into first and second areas 51 and 52.

The lower virtual image 57 divides a part of the windshield 46 into the second area 52 and third area 53. The lower virtual image 57 is formed into a length L2 such that, when it is projected to a surface region of a road R3 a predetermined distance ahead of the viewing point position (eye point) 19 of the driver 18 (see Fig. 7), the projected image has a width equal to or smaller than a lane width H4 of the road R3.

Thus, by the provision of the virtual image 57 that has a projected width equal to or smaller than the lane width H4 of the road R3, and by making use of the generally-known driver's habit of unconsciously trying to keep the vehicle close to the center of the lane during driving of the vehicle, the visual recognition assistance device 40 can effectively visually prompt the driver 18 to drive stably.

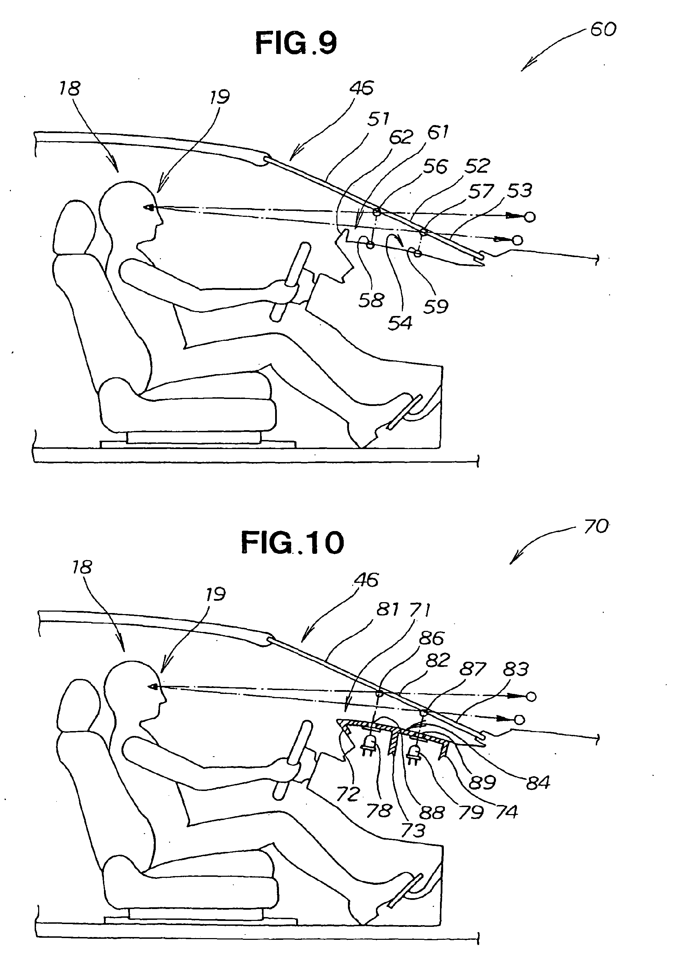

Fig. 9 is a side view showing a vehicular visual recognition assistance device 60 in accordance with a third embodiment of the present invention. The same elements as employed in the first and second embodiments 30 and 40 (see Figs. 2 and 7) are indicated by the same reference numerals and will not be described here to avoid unnecessary duplication.

The vehicular visual recognition assistance device 60 in accordance with the third embodiment of the present invention includes a windshield dividing section 54 that vertically divides at least a part of the windshield 46 into a plurality of substantial horizontal areas (first to third areas 51 - 53 in the illustrated example).

Instrument panel 61 in the third embodiment includes a wall 62 projecting generally vertically to a relatively small height in order to make the windshield dividing section 54 invisible from the driver 18. The instrument panel 61 is preferably formed on the instrument panel 61.

Because the windshield dividing section 54 is disposed in a position where it is invisible from the driver 18 due to the provision of the wall 62, it is possible to prevent the driver 18 from- directly viewing the windshield dividing section 54 over the instrument panel 61 while securing sufficient design quality. As a result, the driver 18 can easily and conveniently use the vehicular visual recognition assistance device 60.

Fig. 10 is a side view showing a vehicular visual recognition assistance device 70 in accordance with a fourth embodiment of the present invention. The same elements as employed in the first and second embodiments 30 and 40 (see Figs. 2 and 7) are indicated by the same reference numerals and will not be described here to avoid unnecessary duplication.

The vehicular visual recognition assistance device 70 in accordance with the fourth embodiment of the present invention includes a windshield dividing section 84 that vertically divides at least a part of the windshield 46 into a plurality of substantial horizontal areas (first to third areas 51 - 53 in the illustrated example).

The windshield dividing section 84 is a virtual image production means disposed under the windshield 46 and capable of causing upper and lower virtual images 86 and 87 to be reflected in the windshield 46.

The windshield dividing section 84 preferably includes first and second band-shaped, horizontal lenses 88 and 89 provided on an instrument panel 71, light emitting members 78 and 79 for illuminating the lenses 88 and 89, and partitioning walls 72 - 74 for intercepting light from the light emitting members 78 and 79.

With the windshield dividing section 84 including the light emitting members 78 and 79 for illuminating the lenses 88 and 89, the vehicular visual recognition assistance device 70 can appropriately deal with variation in outside light, such as outside light variation during driving at night.

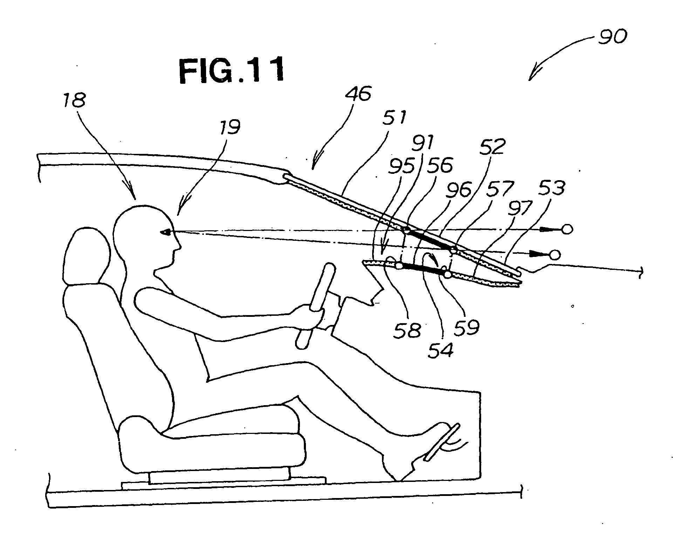

Fig. 11 is a side view showing a vehicular visual recognition assistance device 90 in accordance with a fifth embodiment of the present invention. The same elements as employed in the first and-second embodiments 30 and 40 (see Figs. 2 and 7) are indicated by the same reference numerals and will not be described here to avoid unnecessary duplication.

The vehicular visual recognition assistance device 90 in accordance with the fifth embodiment of the present invention includes a windshield dividing section 54 that vertically divides at least a part of the windshield 46 into a plurality of substantial horizontal areas (first to third areas 51 - 53 in the illustrated example).

Instrument panel 91 has reflection permitting portions 95 and 97 that can be reflected in the first and third areas 51 and 53 corresponding thereto, and a reflection restricting portion 96 that can hardly be reflected in the second area 52 corresponding thereto. Namely, the reflection restricting portion 96 functions to reduce or weaken reflection of the instrument panel 91 in the second area 52.

The reflection permitting portions 95 and 97 are each formed by, for example, a light-colored or reflective glossy surface, while the reflection restricting portion 96 is formed by, for example, a dark-colored or poorly reflective surface.

Namely, the vehicular visual recognition assistance device 90 is characterized in that the windshield dividing section 54 weakens reflection of the instrument panel 91 in the second or middle area 52 of the three areas 51 - 53.

It is generally known that a human driver has a habit of unconsciously selecting an area having a good field of vision. For this reason, in the case where at least a part of the windshield is vertically divided into three substantial horizontal areas, it is preferable to weaken reflection of the instrument panel in the middle area of the windshield while permitting reflection of the instrument panel in the upper and lower area of the windshield, in order to direct the line of vision of the driver toward the middle of the windshield.

By weakening reflection of the instrument panel 91 in the second or middle area 52 of the three areas 51 - 53 while masking the upper and lower (first and third) areas 51 and 53 to a certain degree, the instant embodiment can enhance visibility through the middle or second area of the windshield 46 so that it can cause the line of vision of the driver 18 to be directed to the middle (second) area 52 practically automatically. As a result, the instant embodiment allows the line of vision of the driver 18 to be kept in an appropriate position practically automatically.

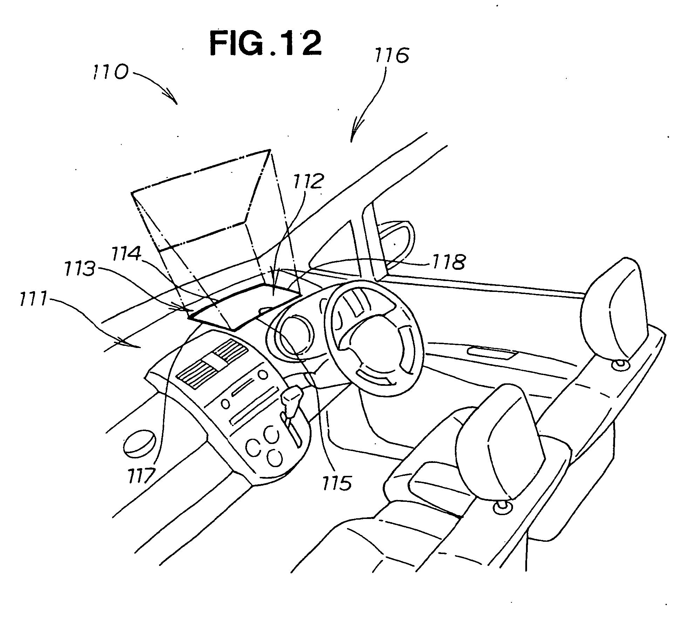

Fig. 12 is a perspective view showing a vehicular visual recognition assistance device 110 in accordance with a sixth embodiment of the present invention. This vehicular visual recognition assistance device 110 includes an instrument panel 111, and a dashboard tray 112 provided on the instrument panel 111 for receiving thereon small articles. Further, the instant embodiment is constructed so that a parting line 113 of the dashboard tray 112 is projected onto the windshield 116.

The parting line 113 comprises front and rear edges 114 and 115 and left and right edges 117 and 118 of the dashboard tray 112. The dashboard tray 112 has an outline such that, when the parting line 113 is projected onto the windshield 116, the front and rear edges 114 and 115 and left and right edges 117 and 118 are projected substantially linearly. Alternatively, only the front and rear edges 114 and 115 may be substantially linear.

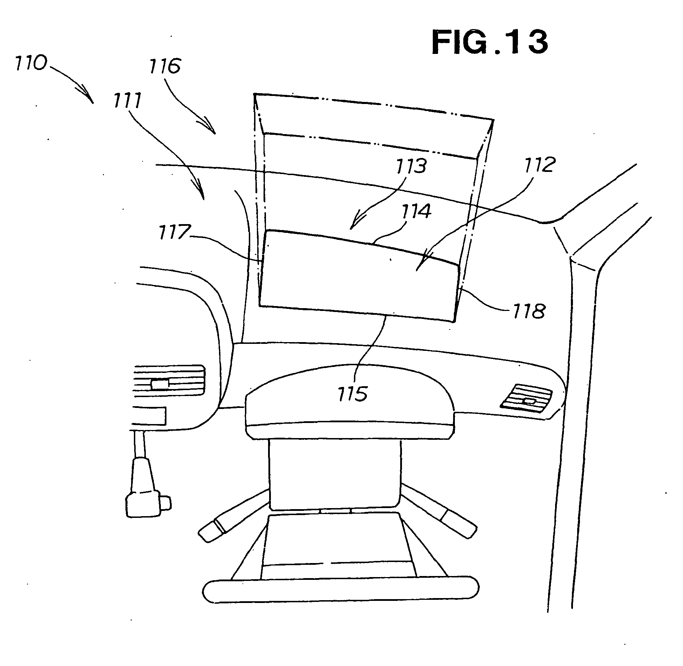

Fig. 13 is a plan view of the vehicular visual recognition assistance device 110 shown in Fig. 12. Because the parting -line of the instrument panel 111 is formed by providing the dashboard tray 112 capable of receiving thereon small articles, it can be formed in a more natural manner without design quality of the instrument panel 111 being adversely influenced. If an illumination means is disposed within the dashboard tray 112, for example, it is also possible to illuminate the parting line 113; in this case, gaps may be formed intentionally in the front and rear edges 114 and 115 so that light leaks out from the instrument panel 111 through the gaps.

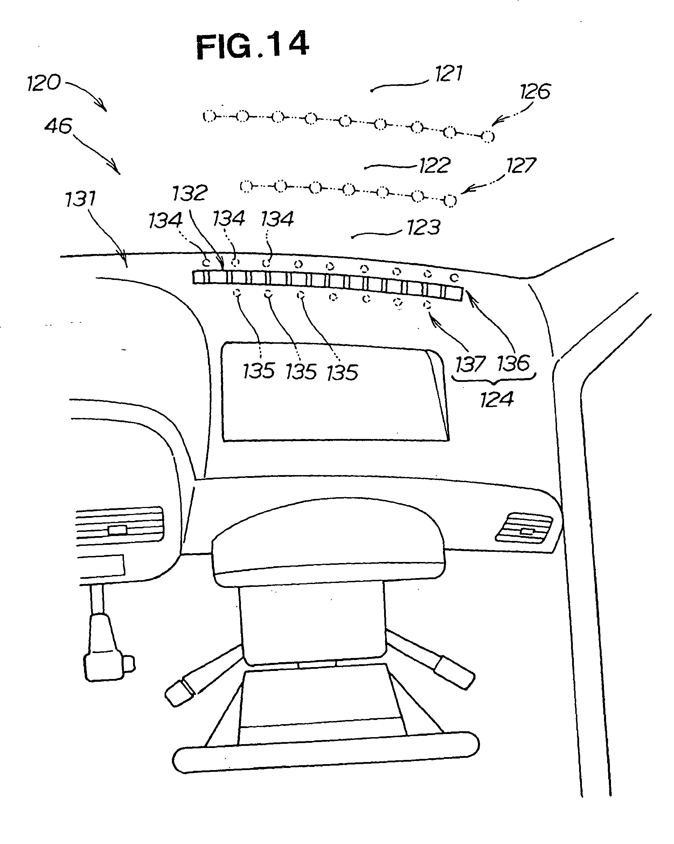

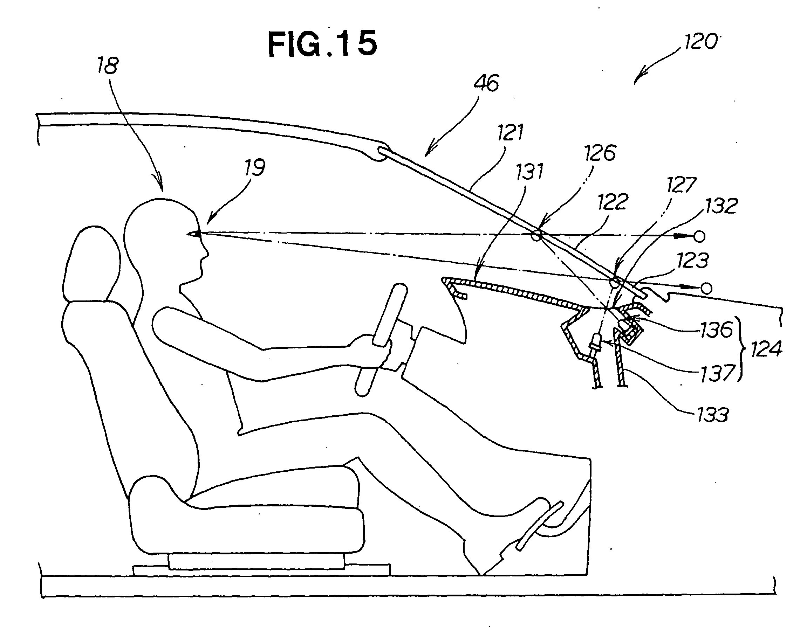

Fig. 14 is a plan view showing a vehicular visual recognition assistance device 120 in accordance with a seventh embodiment of the present invention, and Fig. 15 is a sectional view explanatory of basic principles of the vehicular visual recognition assistance device 120 shown in Fig. 14. The same elements as employed in the second embodiment40 (see Fig. 7) are indicated by the same reference numerals and will not be described here to avoid unnecessary duplication.

The vehicular visual recognition assistance device 120 in accordance with the seventh embodiment of the present invention includes a windshield dividing section 124 that vertically divides at least a part of a windshield 46 into a plurality of substantial horizontal areas (first to third areas 121 - 123 in the illustrated example).

The windshield dividing section 124 in the seventh embodiment is a virtual image production means which is disposed in a nozzle 133 of a defroster 132 that is in turn provided on an instrument panel 131 for removing frost on the windshield 46, and which causes upper and lower virtual images 126 and 127 to be reflected in the windshield 46.

More specifically, the virtual image production means (windshield dividing section) 124 includes a first group 136 of light emitting elements 134 arranged in a substantial straight horizontal array for causing upper virtual images 126 to be reflected in the windshield-46, and a second group 137 of light emitting elements 135 arranged in a substantial straight horizontal array for causing lower virtual images 127 to be reflected in the windshield 46. The light emitting elements 134 and 135 are preferably in the form of light emitting diodes (LEDs).

In the seventh embodiment, where the virtual image production means 124 is disposed in the defroster nozzle 133, there is no need to provide a particular virtual image production means, such as a parting line, on the instrument panel 131. In this way, the seventh embodiment can significantly simplify the shape of the instrument panel 131 and thus enhance the design freedom of the instrument panel 131.

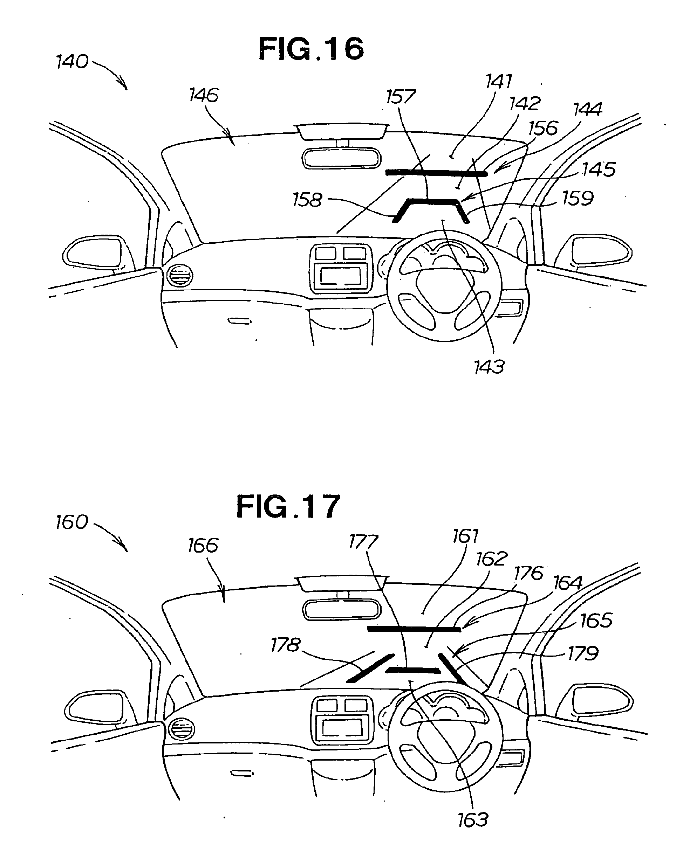

Fig. 16 is a front view of a vehicular visual recognition assistance device 140 in accordance with an eighth embodiment of the present invention. This vehicular visual recognition assistance device 140 includes a windshield dividing section 144 that is disposed generally horizontally on the windshield 46 and vertically divides at least a part of the windshield 46 into a plurality of areas (first to third areas 141 - 143 in the illustrated example), and an auxiliary division section 145 provided as an additional component of the windshield dividing section 144.

The windshield dividing section 144 comprises an upper line 156 provided substantially horizontally on a windshield 146, and a lower line 157 provided substantially parallel to the upper line 156.

The auxiliary division section 145 comprises oblique lines 158 and 159 that extend obliquely downwardly, away from each other, from the opposite ends of the lower line 157 of the windshield dividing section 144.

The oblique lines 158 and 159, extending obliquely downwardly away from each other from the opposite ends of the lower line 157 of the windshield dividing section 144, are extended along the opposed sides of a lane of a road as viewed from the driver. Such an arrangement can not only promote the driver's habit of unconsciously trying to keep the vehicle 10 close to the center of the lane during driving of the vehicle, but also effectively visually prompt the driver to drive stably.

Fig. 17 is a front view of a vehicular visual recognition assistance device 160 in accordance with a ninth embodiment of the present invention. This vehicular visual recognition assistance device 160 includes a windshield dividing section 164 that is disposed generally horizontally on a windshield 166 and vertically divides at least a part of the windshield 166 into a plurality of areas (first to third areas 161 - 163 in the illustrated example), and an auxiliary division section 165 provided as an additional component of the windshield dividing section 164.

The windshield dividing section 164 comprises an upper line 176 provided substantially horizontally on the windshield 166, and a lower line 177 provided substantially parallel to the upper line 176.

The auxiliary division section 165 comprises oblique lines 178 and 179 that are spaced from the opposite ends of the lower line 177 and extend along the opposed sides of a lane of a road as viewed from the driver. Namely, the auxiliary division section 165 need not be formed continuously with the windshield dividing section 164, as long as the oblique lines 178 and 179 extend along the opposed sides of a lane as viewed from the driver. The aforementioned auxiliary dividing section 145 or 165 may also be applied to the above-described first to seventh embodiments.

Whereas the vehicular visual recognition assistance device of the present invention has been described above in relation to the case where at least a part of the windshield is divided into three substantially-horizontal areas as illustrated in Figs. 1 - 7, the present invention is not so limited, and the windshield may be divided into any other plurality of areas than three.

The vehicular visual recognition assistance device of the present invention is suited for use in passenger cars, such as sedans, wagons, etc.

Vehicular visual recognition assistance device includes a dividing section (34) provided, substantially horizontally on a windshield (16) of the vehicle, for vertically dividing at least a part of the windshield into a plurality of areas (31 - 33). The dividing section is formed into a length (L1) such that, when the dividing section is projected to a road surface (R2) a predetermined distance (H1) ahead of a viewing point position (19) of a human driver of the vehicle, the dividing section has a projected- width (H2) equal to or smaller than a lane width (H3) of the road.

## Claims

1. A visual recognition assistance device (30; 140; 160) for a vehicle, comprising
dividing means for providing a first substantially straight horizontal line (37; 57; 87; 114; 127; 157; 177) on a windshield of the vehicle, for vertically dividing at least a part of the windshield into a plurality of areas (31-33; 141-143; 161-163),
wherein said dividing means is provided substantially horizontally on the windshield or includes a virtual image production means (54; 84; 124) disposed under the windshield for causing said first horizontal line to be reflected as a virtual image in the windshield, such that the first horizontal line is visually recognized as a substantial straight line from a viewing point position of a human driver,
wherein said dividing means is constructed so that, when the first horizontal line is projected to a road surface a predetermined distance (H1) ahead of a viewing point position (19) of a human driver of the vehicle, said dividing means has a projected width (H2) equal to or smaller than a lane width (H3) of the road,
**characterized in that**
the dividing means provides a second substantially straight horizontal line (36; 56; 86; 115; 126; 156; 176) positioned above the first horizontal line, and
the vertical positions of the first and second horizontal lines in relation to the roof (17) and instrument panel (21) of the vehicule are such that a driver's line of vision is directed towards a middle of the area (32; 142; 162) between the first an the second horizontal lines such that it extends from an eye point (19) of the driver (18) towards road regions remote from the eye point (19).

2. The visual recognition assistance device of claim 1, further comprising auxiliary division means (145; 165) that comprises a pair of oblique lines extending obliquely downwardly, away from each other, at opposite ends of said dividing means (158, 159, 178, 179).

3. The visual recognition assistance device of claim 1, wherein said virtual image production means (54) includes an instrument panel (41; 111) disposed under the windshield, and a parting line (58, 59; 113) formed on said instrument panel.

4. The visual recognition assistance device of claim 1, wherein said virtual image production means (124) is disposed in a defroster nozzle (133).

5. The visual recognition assistance device of claim 1 or 3, wherein said virtual image production means (54) is disposed in a position where said virtual image production means is invisible from the human driver.

6. The visual recognition assistance device of any one of claims 3 to 6, wherein said virtual image production means (54; 84; 124) is formed so that, when the virtual image is projected to a road surface a predetermined distance ahead of a viewing point position (19) of the driver, the virtual image has a projected width (H4) equal to or smaller than a lane width of the road.

7. The visual recognition assistance device of any one of claims 3 to 6, wherein said dividing means (54) vertically divides the windshield into at least three areas (51 - 53) and is constructed to weaken inflection of said instrument panel (91) in a middle one of the at least three areas.

8. The visual recognition assistance device of any one of claims 3 or 5 to 7, wherein the parting line (113) on said instrument panel (111) is formed by providing a dashboard tray (112) capable of receiving thereon a small article.

## Patentansprüche

1. Visueller Erkennungsassistent (30, 140, 160) für ein Fahrzeug, der folgendes umfasst:
eine Aufteilungseinrichtung zum Bereitstellen einer ersten im Wesentlichen geraden horizontalen Linie (37, 57, 87, 114, 127, 157, 177) auf einer Windschutzscheibe des Fahrzeugs, um wenigstens einen Teil der Windschutzscheibe in mehrere Bereiche (31-33, 141-143, 161-163) vertikal zu unterteilen,
wobei die Aufteilungseinrichtung auf der Windschutzscheibe im Wesentlichen horizontal bereitgestellt ist oder eine Erzeugungseinrichtung für virtuelle Bilder (54, 84, 124) umfasst, die unterhalb der Windschutzscheibe angeordnet ist, so dass sie bewirkt, dass die erste horizontale Linie als ein virtuelles Bild in der Windschutzscheibe reflektiert wird, so dass die erste horizontale Linie als eine im Wesentlichen gerade Linie von einer Sichtposition eines menschlichen Fahrers aus visuell erkannt wird,
wobei die Aufteilungseinrichtung derart konstruiert ist, dass, wenn die erste horizontale Linie in einem vorbestimmten Abstand (H 1) von einer Sichtposition (19) eines menschlichen Fahrers des Fahrzeugs in Vorausrichtung projiziert wird, die Aufteilungseinrichtung eine projizierte Breite (H2) aufweist, die kleiner als die Spurbreite (H3) der Straße ist,
**dadurch gekennzeichnet, dass**
die Aufteilungseinrichtung eine zweite im Wesentlichen gerade horizontale Linie (36, 56, 86, 115, 126, 156, 176) bereitstellt, die oberhalb der ersten horizontalen Linie positioniert ist, und
die vertikalen Positionen der ersten und der zweiten horizontalen Linie in Bezug auf das Dach (17) und das Armaturenbrett (21) des Fahrzeugs derart sind, dass eine Sichtlinie des Fahrers in Richtung einer Mitte des Bereichs (32, 142, 162) zwischen der ersten und der zweiten horizontalen Linie derart gerichtet ist, dass sie sich von einer Augenposition (19) des Fahrers (18) in Richtung von Straßenbereichen erstreckt, die von der Augenposition (19) entfernt sind.

2. Visueller Erkennungsassistent nach Anspruch 1, der weiter eine Hilfsaufteilungseinrichtung (145, 165) umfasst, die ein Paar von schrägen Linien umfasst, die sich an gegenüberliegenden Enden der Aufteilungseinrichtung (158, 159, 178, 179) schräg nach unten von einander weg erstrecken.

3. Visueller Erkennungsassistent nach Anspruch 1, bei dem die Erzeugungseinrichtung für virtuelle Bilder (54) ein Armaturenbrett (41, 111), das unterhalb der Windschutzscheibe angeordnet ist, und eine Teilungslinie (58, 59, 113), die auf dem Armaturenbrett ausgebildet ist, aufweist.

4. Visueller Erkennungsassistent nach Anspruch 1, bei dem die Erzeugungseinrichtung für virtuelle Bilder (124) in einer Defrost-Düse (133) angeordnet ist.

5. Visueller Erkennungsassistent nach Anspruch 1 oder 3, bei dem die Erzeugungseinrichtung für virtuelle Bilder (54) an einer Position angeordnet ist, an der die Erzeugungseinrichtung für virtuelle Bilder für den menschlichen Fahrer unsichtbar ist.

6. Visueller Erkennungsassistent nach einem der Ansprüche 3 bis 5, bei dem die Erzeugungseinrichtung (54, 84, 124) für virtuelle Bilder derart ausgebildet ist, dass, wenn das virtuelle Bild auf eine Straßenoberfläche in einem vorbestimmten Abstand vor einer Sichtposition (19) des Fahrers projiziert wird, das virtuelle Bild eine projizierte Breite (H4) hat, die gleich oder kleiner als eine Spurbreite der Straße ist.

7. Visuelle Erkennungseinrichtung nach einem der Ansprüche 3 bis 6, bei der die Aufteilungseinrichtung (54) die Windschutzscheibe vertikal in wenigstens drei Bereiche (51-53) aufteilt und dazu konstruiert ist, die Krümmung des Armaturenbretts (91) in einem mittleren der wenigstens drei Bereiche abzuschwächen.

8. Visueller Erkennungsassistent nach einem der Ansprüche 3 oder 5 bis 7, bei dem die Teilungslinie (113) auf dem Armaturenbrett (111) gebildet ist, indem eine Ablage (112) im Armaturenbrett bereitgestellt wird, in der ein kleiner Gegenstand aufnehmbar ist.

## Revendications

1. Dispositif d'assistance à la reconnaissance visuelle (30 ; 140 ; 160) pour un véhicule, comprenant :
des moyens de division pour fournir une première ligne horizontale sensiblement droite (37 ; 57 ; 87 ; 114 ; 127 ; 157 ; 177) sur un pare-brise du véhicule, pour diviser verticalement au moins une partie du pare-brise en une pluralité de zones (31 à 33 ; 141 à 143 ; 161 à 163),
dans lequel lesdits moyens de division sont prévus sensiblement horizontalement sur le pare-brise ou comprennent des moyens de production d'image virtuelle (54 ; 84 ; 124) disposés sous le pare-brise pour amener ladite première ligne horizontale à être réfléchie en tant qu'image virtuelle dans le pare-brise, de sorte que la première ligne horizontale soit visuellement reconnue en tant que ligne sensiblement droite à partir d'une position de point de vision d'un conducteur humain,
dans lequel lesdits moyens de division sont réalisés de sorte que, lorsque la première ligne horizontale est projetée vers un revêtement routier à une distance prédéterminée (H1) devant une position de point de vision (19) d'un conducteur humain du véhicule, lesdits moyens de division aient une largeur projetée (H2) égale ou inférieure à une largeur de voie (H3) de la route,
**caractérisé en ce que**
les moyens de division fournissent une deuxième ligne horizontale sensiblement droite (36 ; 56 ; 86 ; 115 ; 126 ; 156 ; 176) positionnée au-dessus de la première ligne horizontale, et
les positions verticales des première et deuxième lignes horizontales en relation avec le toit (17) et le tableau de bord (21) du véhicule sont telles que la ligne de vision du conducteur est dirigée vers un milieu de la zone (32 ; 142 ; 162) entre les première et deuxième lignes horizontales de sorte qu'elle s'étend d'un point de l'oeil (19) du conducteur (18) vers des régions de route à distance du point de l'oeil (19).

2. Dispositif d'assistance à la reconnaissance visuelle selon la revendication 1, comprenant en outre des moyens de division auxiliaires (145 ; 165) qui comprennent une paire de lignes obliques s'étendant en oblique vers le bas, en s'éloignant l'une de l'autre, aux extrémités opposées desdits moyens de division (158, 159, 178, 179).

3. Dispositif d'assistance à la reconnaissance visuelle selon la revendication 1, dans lequel lesdits moyens de production d'image virtuelle (54) comprennent un tableau de bord (41 ; 111) disposé sous le pare-brise, et une ligne de division (58, 59 ; 113) formée sur ledit tableau de bord.

4. Dispositif d'assistance à la reconnaissance visuelle selon la revendication 1, dans lequel lesdits moyens de production d'image virtuelle (124) sont disposés dans une buse de dégivreur (133).

5. Dispositif d'assistance à la reconnaissance visuelle selon la revendication 1 ou 3, dans lequel lesdits moyens de production d'image virtuelle (54) sont disposés à une position où lesdits moyens de production d'image virtuelle ne sont pas visibles par le conducteur humain.

6. Dispositif d'assistance à la reconnaissance visuelle selon l'une quelconque des revendications 3 à 6, dans lequel lesdits moyens de production d'image virtuelle (54 ; 84 ; 124) sont formés de sorte que, lorsque l'image virtuelle est projetée vers un revêtement routier à une distance prédéterminée devant une position de point de vision (19) du conducteur, l'image virtuelle ait une largeur projetée (H4) égale ou inférieure à une largeur de voie de la route.

7. Dispositif d'assistance à la reconnaissance visuelle selon l'une quelconque des revendications 3 à 6, dans lequel lesdits moyens de division (54) divisent verticalement le pare-brise en au moins trois zones (51 à 53) et sont réalisés pour diminuer l'inflexion dudit tableau de bord (91) une zone médiane parmi lesdites au moins trois zones.

8. Dispositif d'assistance à la reconnaissance visuelle selon l'une quelconque des revendications 3 ou 5 à 7, dans lequel la ligne de division (113) sur ledit tableau de bord (111) est formée en prévoyant un plateau de tableau de bord (112) capable de recevoir sur celui-ci un petit article.
